# EUROPEAN PATENT SPECIFICATION

(11) **EP 4 513 224 B1**
(45) Date of publication and mention of the grant of the patent: **12.08.2026**
(21) Application number: 22940629.3
(22) Date of filing: 06.05.2022
(51) Int. Cl.: G01S 7/35, G01S 7/02, G01S 13/58, G01S 13/34, G01S 13/931

(54) **SIGNAL SENDING METHOD AND RECEIVING METHOD AND CORRESPONDING DEVICES**
SIGNALSENDEVERFAHREN UND EMPFANGSVERFAHREN UND ENTSPRECHENDE VORRICHTUNGEN
PROCÉDÉ D'ENVOI DE SIGNAL ET PROCÉDÉ DE RÉCEPTION ET DISPOSITIFS CORRESPONDANTS

(43) Date of publication of application: 26.02.2025
(73) Proprietor: Yinwang Intelligent Technologies Co., Ltd., Shenzhen, Guangdong 518110 (CN)
(72) Inventor: SONG, Sida, Shenzhen, Guangdong 518129 (CN); MA, Sha, Shenzhen, Guangdong 518129 (CN); ZHANG, Hui, Shenzhen, Guangdong 518129 (CN); CHANG, Guanghong, Shenzhen, Guangdong 518129 (CN)
(74) Representative: Maiwald GmbH
(86) International application number: PCT/CN2022/091233
(87) International publication number: WO 2023/212935

(56) References cited:
- EP-A1- 2 755 045
- EP-A2- 1 918 736
- WO-A1-2018/086783
- CN-A- 112 639 521
- US-A1- 2021 297 963

## Description

### TECHNICAL FIELD

This application relates to the sensor field, and in particular, to a signal sending method, a signal receiving method, and corresponding apparatuses.

### BACKGROUND

With development of society, intelligent vehicles are gradually entering people's daily life. Various radars (namely, in-vehicle radars) installed on vehicles, such as millimeter-wave radars, lidars, and ultrasonic radars, can sense a surrounding environment at any time during vehicle traveling, collect data, identify and track a moving object, identify a static scenario (for example, a lane line and a sign), and perform route planning based on a navigator and map data, effectively improving driving safety and comfort. The EP 2 755 045 A1 refers to a method for the cyclic measuring of distances and speeds of objects with an FMCW radar sensor. The EP 1 918 736 A2 refers to a radar, radio frequency sensor, and radar detection method. The WO 2018 / 086783 A1 refers to a radar sensor for motor vehicles.

With widespread use of the in-vehicle radars, mutual interference between the in-vehicle radars is becoming more serious. Due to mutual interference, a detection probability of the in-vehicle radar is reduced, or a false alarm probability of the in-vehicle radar is increased, posing a non-negligible impact on driving safety and comfort. Therefore, how to reduce interference between the in-vehicle radars is a technical problem that needs to be resolved urgently.

### SUMMARY

This application provides a signal sending method, a signal receiving method, and corresponding apparatuses, to reduce interference between in-vehicle radars, and further ensure speed measurement performance of a radar. The invention is set out in the appended set of claims.

According to a first aspect, a signal sending method is provided. The method may be performed by a first apparatus. The first apparatus is, for example, a radar, or the first apparatus may be a chip installed in a communication device. The communication device is, for example, a radar or another device. This is not limited in this application. The method includes: generating a first frequency modulated continuous wave sequence; and transmitting the first frequency modulated continuous wave sequence, where the first frequency modulated continuous wave sequence includes N frequency modulated continuous waves, and N is an integer greater than or equal to 1. A product of a time domain position and a corresponding frequency domain position in a first frequency modulated continuous wave in the N frequency modulated continuous waves meets a first condition.

In the foregoing solution, in a signal transmission phase, the first apparatus transmits a signal to the outside by using a designed waveform (for example, the product of the time domain position and the corresponding frequency domain position in the first frequency modulated continuous wave in the N frequency modulated continuous waves meets the first condition), so that in a subsequent signal receiving phase, a signal receiving apparatus (for example, a second apparatus) can learn the waveform of the signal sent by the first apparatus (for example, determine the time domain position or the frequency domain position of the first frequency modulated continuous wave based on the first condition), and can use a simple digital signal processing method (for example, FFT) for speed measurement, thereby improving processing efficiency. In a scenario in which a plurality of radars exist at the same time, each of the plurality of radars may transmit a signal by using this method. During specific implementation, it is only required to ensure that signal waveforms corresponding to different radars correspond to different frequency domain positions in a same time domain position (that is, frequency domain resource collision between different radars at a same moment is avoided), so that mutual interference between the radars can be reduced or even eliminated. In addition, because each radar transmits a signal by using a designed waveform, a receiving apparatus corresponding to each radar may use a simple digital signal processing method (for example, FFT) for speed measurement, processing efficiency can be improved, a probability of mutual interference between the radars can be reduced, and speed measurement performance of the radar is ensured.

In a possible design, the first condition is related to a position of the first frequency modulated continuous wave in the N frequency modulated continuous waves. Further, for each frequency modulated continuous wave in the N frequency modulated continuous waves, a product of a time domain position and a corresponding frequency domain position of the frequency modulated continuous wave may meet a specific condition. Conditions that are met by products of time domain positions and corresponding frequency domain positions of different frequency modulated continuous waves may be different, and a condition met by a product of a time domain position and a corresponding frequency domain position of each frequency modulated continuous wave may be related to a position of the frequency modulated continuous wave in the N frequency modulated continuous waves.

In this design manner, the time domain position and the frequency domain position of the first frequency modulated continuous wave may be determined based on the position of the first frequency modulated continuous wave in the N frequency modulated continuous waves.

In a possible design, the frequency domain position includes a start frequency and/or a center frequency. It should be understood that the frequency domain position is a reference frequency used by the radar to perform frequency hopping, and a reference frequency that is in each frequency modulated continuous wave in the first frequency modulated continuous wave sequence and that is used for performing frequency hopping needs to use a same reference standard. For example, the first frequency modulated continuous wave sequence includes the first frequency modulated continuous wave and a second frequency modulated continuous wave, where the frequency domain position of the first frequency modulated continuous wave is a start frequency of the first frequency modulated continuous wave, and a frequency domain position of the second frequency modulated continuous wave is also a start frequency of the second frequency modulated continuous wave; or the frequency domain position of the first frequency modulated continuous wave is a center frequency of the first frequency modulated continuous wave, and the frequency domain position of the second frequency modulated continuous wave is also a center frequency of the second frequency modulated continuous wave.

Certainly, in actual application, the frequency domain position may alternatively be another reference frequency that is uniformly set in a frequency domain range of each frequency modulated continuous wave. This is not limited in this application.

In a possible design, the time domain position includes a start time and/or a center time. It may be understood that there may be a correspondence between a time domain position and a frequency domain position. For example, if the frequency domain position of the first frequency modulated continuous wave is the start frequency of the first frequency modulated continuous wave, the time domain position of the first frequency modulated continuous wave is a start time of the first frequency modulated continuous wave.

Certainly, in actual application, the time domain position may alternatively be another time position that is uniformly set in a time domain range of each frequency modulated continuous wave. This is not limited in this application.

In a possible design, the first condition may include: ${T}_{n} = \frac{α + nβ}{{f}_{n}}$

n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters.

It may be understood that, in actual application, the foregoing formula may further have other variations.

For example, ${T}_{n} = \frac{α + nβ}{{f}_{n}} + {Δt}_{n}$

Δtₙ is a time deviation caused by an error during product implementation, and when values of n are different, values of Δtₙ may be the same or different.

For example, ${f}_{n} = \frac{α + nβ}{{T}_{n}} + {Δf}_{n}$

Δtₙ is a time deviation caused by an error during product implementation, and when values of n are different, values of Δtₙ may be the same or different.

For example, ${f}_{n} = \frac{α + nβ}{{T}_{n}} + {Δf}_{n}$

Δfₙ is a frequency deviation caused by an error during product implementation, and when values of n are different, values of Δfₙ may be the same or different.

In a possible design, frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀. In other words, waveforms of the N frequency modulated continuous waves may perform equal-interval frequency hopping in frequency domain. Equal-interval frequency hopping may be specifically equal-interval increasing, or may be equal-interval decreasing. This is not limited in this application.

In a possible design, in a case of equal-interval frequency hopping, α and β may be configured as the following parameters: $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ where
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, where duration of the N frequency modulated continuous waves is the same.

It may be understood that, in actual application, the foregoing formula may further have other variations.

In this way, it can be ensured that two adj acent frequency modulated continuous waves (in time domain) do not overlap in time, and that the radar has a large speed measurement range.

In a possible design, the waveforms of the N frequency modulated continuous waves may perform random frequency hopping in frequency domain. For example, the first apparatus may determine a frequency domain position of each of the N frequency modulated continuous waves based on a frequency hopping capability of the radar.

In this case, α and β can be set to the following parameters: $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ where
${nf}_{n - 1} - \left(n-1\right) {f}_{n} > 0 ;$ T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, where duration of the N frequency modulated continuous waves is the same.

It may be understood that, in actual application, the foregoing formula may further have other variations.

It should be noted that the design is not limited to a case in which random frequency hopping is applied, provided that a frequency domain position of each of the N frequency modulated continuous waves can be determined.

In this way, it can be ensured that two adjacent frequency modulated continuous waves (in time domain) do not overlap in time, and that the radar has a large speed measurement range.

According to a second aspect, a signal receiving method is provided. The method may be performed by a second apparatus. The second apparatus is, for example, a radar, or the second apparatus may be a chip installed in a communication device. The communication device is, for example, a radar or another device. This is not limited in this application. A first apparatus and the second apparatus may be integrated into one chip, or may be separately integrated into different chips. This is not limited in this application. The method includes: receiving a second frequency modulated continuous wave sequence, where the second frequency modulated continuous wave sequence is a signal formed after a first frequency modulated continuous wave sequence is transmitted by the first apparatus, propagated through space, and reflected by a target; and determining information about the target based on the second frequency modulated continuous wave sequence and the first frequency modulated continuous wave sequence, where the information includes a speed and/or a distance. The first frequency modulated continuous wave sequence includes N frequency modulated continuous waves, N is an integer greater than or equal to 1, and a product of a time domain position and a corresponding frequency domain position in a first frequency modulated continuous wave in the N frequency modulated continuous waves meets a first condition.

In this solution, the second apparatus determines information such as the speed and the distance of the target based on the second frequency modulated continuous wave sequence and the first frequency modulated continuous wave sequence. Because the first frequency modulated continuous wave sequence is a waveform designed in advance (that is, the product of the time domain position and the corresponding frequency domain position in the first frequency modulated continuous wave in the N frequency modulated continuous waves meets the first condition), the second apparatus can estimate a parameter of the target by using a simple digital signal processing method, to ensure speed measurement performance of the radar.

For a description of the first frequency modulated continuous wave sequence, refer to related content in the first aspect. Details are not described herein again.

In a possible design, the determining a speed of the target based on the second frequency modulated continuous wave sequence and the first frequency modulated continuous wave sequence includes: determining an intermediate frequency signal sequence based on the second frequency modulated continuous wave sequence and the first frequency modulated continuous wave sequence; and processing the intermediate frequency signal sequence through FFT.

Certainly, FFT is merely an example rather than a specific limitation.

In a possible design, before the processing the intermediate frequency signal sequence through FFT, the method further includes: performing phase compensation on the second frequency modulated continuous wave sequence or the intermediate frequency signal sequence based on an interval between frequency domain positions of the N frequency modulated continuous waves.

In this design, a phase difference between two adjacent frequency modulated continuous waves in the second frequency modulated continuous wave sequence caused by a distance is compensated, and accuracy of speed detection can be improved.

According to a third aspect, a signal sending apparatus is provided. The apparatus includes modules/units/means configured to perform the first aspect or any possible design of the first aspect. The modules/units/means may be implemented by software, or may be implemented by hardware, or may be implemented by hardware executing corresponding software.

For example, the apparatus may include: a processing unit, configured to generate a first frequency modulated continuous wave sequence; and a transmit unit, configured to transmit the first frequency modulated continuous wave sequence, where the first frequency modulated continuous wave sequence includes N frequency modulated continuous waves, and N is an integer greater than or equal to 1. A product of a time domain position and a corresponding frequency domain position in a first frequency modulated continuous wave in the N frequency modulated continuous waves meets a first condition.

In a possible design, the first condition is related to a position of the first frequency modulated continuous wave in the N frequency modulated continuous waves.

In a possible design, the frequency domain position includes a start frequency and/or a center frequency, and the time domain position includes a start time and/or a center time.

In a possible design, the first condition includes: ${T}_{n} = \frac{α + nβ}{{f}_{n}} ,$ where
n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters.

In a possible design, frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀.

In a possible design, in a case of equal-interval frequency hopping, α and β may be configured as the following parameters: $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ where
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, where duration of the N frequency modulated continuous waves is the same.

In a possible design, in a case of random frequency hopping, α and β may be configured as the following parameters: $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ where
*nf*_{*n*-1} - (*n* - 1)*fₙ* > 0; T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, where duration of the N frequency modulated continuous waves is the same.

According to a fourth aspect, a signal receiving apparatus is provided. The apparatus includes modules/units/means configured to perform the second aspect or any possible design of the second aspect. The modules/units/means may be implemented by software, or may be implemented by hardware, or may be implemented by hardware executing corresponding software.

For example, the apparatus may include: a receiving unit, configured to receive a second frequency modulated continuous wave sequence, where the second frequency modulated continuous wave sequence is a signal formed after a first frequency modulated continuous wave sequence is transmitted by a first apparatus, propagated through space, and reflected by a target; and a processing unit, configured to determine information about the target based on the second frequency modulated continuous wave sequence and the first frequency modulated continuous wave sequence, where the information includes a speed and/or a distance. The first frequency modulated continuous wave sequence includes N frequency modulated continuous waves, N is an integer greater than or equal to 1, and a product of a time domain position and a corresponding frequency domain position in a first frequency modulated continuous wave in the N frequency modulated continuous waves meets a first condition.

Optionally, the processing unit is specifically configured to: determine an intermediate frequency signal sequence based on the second frequency modulated continuous wave sequence and the first frequency modulated continuous wave sequence; and process the intermediate frequency signal sequence through FFT.

Optionally, the processing unit may be further configured to: before processing the intermediate frequency signal sequence through FFT, perform phase compensation on the second frequency modulated continuous wave sequence or the intermediate frequency signal sequence based on an interval of frequency domain positions of the N frequency modulated continuous waves.

According to a fifth aspect, a communication apparatus is provided, including at least one processor and an interface circuit, where the interface circuit is configured to: receive a signal from another apparatus outside the apparatus and transmit the signal to the processor, or send a signal from the processor to the another apparatus outside the apparatus, and the processor is configured to implement the method according to the first aspect or any one of the possible designs of the first aspect, or the method according to the second aspect or any one of the possible designs of the second aspect by using a logic circuit or by executing code instructions.

According to a sixth aspect, a radar system is provided, including: a first apparatus, configured to perform the method according to the first aspect or any one of the possible designs of the first aspect; and a second apparatus, configured to perform the method according to the second aspect or any one of the possible designs of the second aspect.

According to a seventh aspect, a terminal device is provided, including: a first apparatus, configured to perform the method according to the first aspect or any one of the possible designs of the first aspect; and a second apparatus, configured to perform the method according to the second aspect or any one of the possible designs of the second aspect.

Optionally, the terminal device may be a vehicle, an uncrewed aerial vehicle, a helicopter, aircraft, a ship, an intelligent transportation device, a smart home device, or the like. A specific form of the terminal device is not limited in embodiments of this application.

According to an eighth aspect, an embodiment of this application provides a computer-readable storage medium. The computer-readable storage medium stores a computer program or instructions. When the computer program or the instructions are executed by a communication apparatus, the method according to the first aspect or any one of the possible designs of the first aspect, or the method according to the second aspect or any one of the possible designs of the second aspect is implemented.

According to a ninth aspect, a computer program product is provided. The computer program product stores instructions. When the computer program product runs on a computer, the computer is enabled to perform the method according to the first aspect or any one of the possible designs of the first aspect, or the method according to the second aspect or any one of the possible designs of the second aspect.

For specific beneficial effects of the third aspect to the ninth aspect, refer to technical effects that can be achieved by corresponding designs in the first aspect or the second aspect. Details are not described herein again.

### BRIEF DESCRIPTION OF DRAWINGS

FIG. 1 is a diagram of an operating principle of a millimeter-wave radar;
FIG. 2 is a schematic diagram of a frequency modulated continuous wave;
FIG. 3 is a schematic diagram of a frequency modulated continuous wave of a plurality of periods;
FIG. 4 is a schematic diagram of a transmitted signal, a reflected signal, and an intermediate frequency signal;
FIG. 5 is a schematic diagram of mutual interference between in-vehicle radars;
FIG. 6 and FIG. 7 are schematic diagrams of a possible false intermediate frequency signal;
FIG. 8 and FIG. 9 are schematic diagrams showing that a possible interference signal drowns a target signal;
FIG. 10 is a schematic diagram of radar random frequency hopping;
FIG. 11 is a schematic diagram of a possible application scenario of an embodiment of this application;
FIG. 12 is a flowchart of a signal sending method according to an embodiment of this application;
FIG. 13 is a schematic diagram of a time domain range and a frequency domain range of a frequency modulated continuous wave;
FIG. 14 is a schematic diagram of a possible correspondence between a time domain position and a frequency domain position of a frequency modulated continuous wave;
FIG. 15 is a flowchart of a signal receiving method according to an embodiment of this application;
FIG. 16 is a flowchart of a possible signal processing method according to an embodiment of this application;
FIG. 17 is a flowchart of another possible signal processing method according to an embodiment of this application;
FIG. 18 is a schematic diagram of a structure of a signal sending apparatus according to an embodiment of this application;
FIG. 19 is a schematic diagram of a structure of a signal receiving apparatus according to an embodiment of this application; and
FIG. 20 is a schematic diagram of a structure of a communication apparatus according to an embodiment of this application.

### DESCRIPTION OF EMBODIMENTS

A millimeter wave is an electromagnetic wave whose wavelength ranges from 1 mm to 10 mm, and corresponds to a frequency range from 30 GHz to 300 GHz. In this frequency band, millimeter wave-related features are very suitable for use in the in-vehicle field. For example, a high bandwidth means abundant frequency domain resources and a low antenna side lobe, thereby facilitating imaging or quasi-imaging. A short wavelength means a reduced size of a radar device and a reduced antenna diameter, and therefore a weight is reduced. A narrow beam means that in a case of a same antenna size, a millimeter-wave beam is much narrower than a micrometer-wave beam, and therefore radar resolution is high. Strong penetration means that compared with a lidar and an optical system, the millimeter-wave radar has a better capability of penetrating smoke, dust, and fog, and can work around the clock.

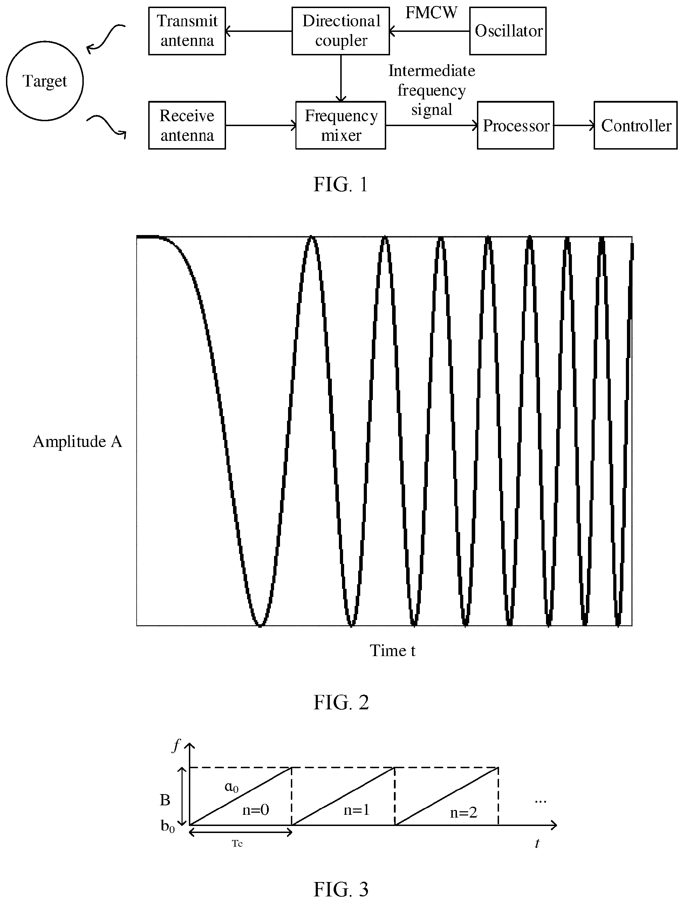

A millimeter-wave radar is a radar operating in a millimeter-wave band, and usually includes apparatuses such as an oscillator, a transmit antenna, a receive antenna, a frequency mixer, a processor, and a controller. FIG. 1 is a diagram of an operating principle of the millimeter-wave radar. The oscillator produces a radar signal whose frequency increases linearly with time. The radar signal is usually a frequency modulated continuous wave (Frequency Modulated Continuous Wave, FMCW). A part of the radar signal is output to the frequency mixer through a directional coupler as a local oscillator signal, and a part is transmitted through the transmit antenna. The receive antenna receives a radar signal (or referred to as a reflected signal or an echo signal) reflected after the transmitted radar signal encounters an object in front of a vehicle. The frequency mixer performs frequency mixing on the received radar signal and the local oscillator signal to obtain an intermediate frequency signal (or referred to as an intermediate frequency echo signal). The intermediate frequency signal includes information such as a distance, a speed, and an angle of a target that are relative to the radar system. The intermediate frequency signal passes through a low-pass filter and undergoes amplification processing, and then is transmitted to the processor. The processor processes the received signal, for example, performs fast Fourier transform, spectrum analysis, and the like on the received signal, to obtain information about the distance, the speed, and the angle of the target object that are relative to the radar system. Finally, the processor may output the obtained information to the controller, to control behavior of the vehicle.

A waveform of a frequency modulated continuous wave of the millimeter-wave radar is usually a sawtooth wave or a triangular wave. The following uses the sawtooth wave as an example to describe in detail a ranging principle of the millimeter-wave radar. A ranging principle of the triangular wave is similar to the ranging principle of the sawtooth wave.

As shown in FIG. 2, a linear frequency modulated continuous wave is a signal whose frequency changes linearly with time.

As shown in FIG. 3, the oscillator of the millimeter-wave radar outputs frequency modulated continuous wave of a plurality of periods, where a period of the frequency modulated continuous wave (duration from start to end of the frequency modulated continuous wave) is T_{c}, a slope is *a*₀, a bandwidth is B, and a start frequency of the frequency modulated continuous wave is b₀. The frequency modulated continuous wave signal shown in FIG. 2 is also referred to as a chirp (chirp) signal.

An equivalent baseband signal of a single-period frequency modulated continuous wave that is output by the oscillator of the millimeter-wave radar may be expressed as follows: $\begin{matrix}{s}_{BB , n}^{Tx} \left(t\right) = A exp \left\{j2π\left[\frac{{a}_{0}}{2}{\left(t-{nT}_{c}\right)}^{2}+{φ}_{0}\right]\right\} exp \left(j2{πb}_{0}t\right) \\ {nT}_{c} \leq t < \left(n+1\right) {T}_{c} , n = 0 , 1 , 2 , … , N - 1\end{matrix}$

A represents an amplitude of the equivalent baseband signal, a₀ represents a slope of the equivalent baseband signal, b₀ represents an intercept of the equivalent baseband signal on a coordinate axis corresponding to a frequency *f*, φ₀ represents an initial phase of the equivalent baseband signal, and exp represents an exponential function of e. The frequency is defined as a change rate of a phase relative to time. Therefore, the frequency of the equivalent baseband signal is as follows: $\begin{matrix}f = \frac{d \left(\frac{{a}_{0}}{2}{\left(t-{nT}_{c}\right)}^{2}+{φ}_{0}+{b}_{0}t\right)}{dt} = {a}_{0} \left(t-{nT}_{c}\right) + {b}_{0} , \\ {nT}_{c} \leq t < \left(n+1\right) {T}_{c} , n = 0 , 1 , 2 , … , N - 1\end{matrix}$

An image of formula 1.2 is shown in FIG. 3.

After up-conversion is performed on an equivalent baseband signal of a frequency modulated continuous wave that is of an n^{th} period and that is transmitted by an oscillator, the equivalent baseband signal is radiated by the transmit antenna of the millimeter-wave radar. The transmitted signal may be expressed as follows: $\begin{matrix}{S}_{RF , n}^{Tx} \left(t\right) = {s}_{BB , n}^{Tx} \left(t\right) exp \left(j2{πf}_{c}t\right) \\ = A exp \left\{j2π\left[\frac{{a}_{0}}{2}{\left(t-{nT}_{c}\right)}^{2}+{φ}_{0}\right]\right\} exp \left[j2π\left({f}_{c}+{b}_{0}\right)t\right] , \\ {nT}_{c} \leq t < \left(n+1\right) {T}_{c} , n = 0 , 1 , 2 , … , N - 1\end{matrix}$

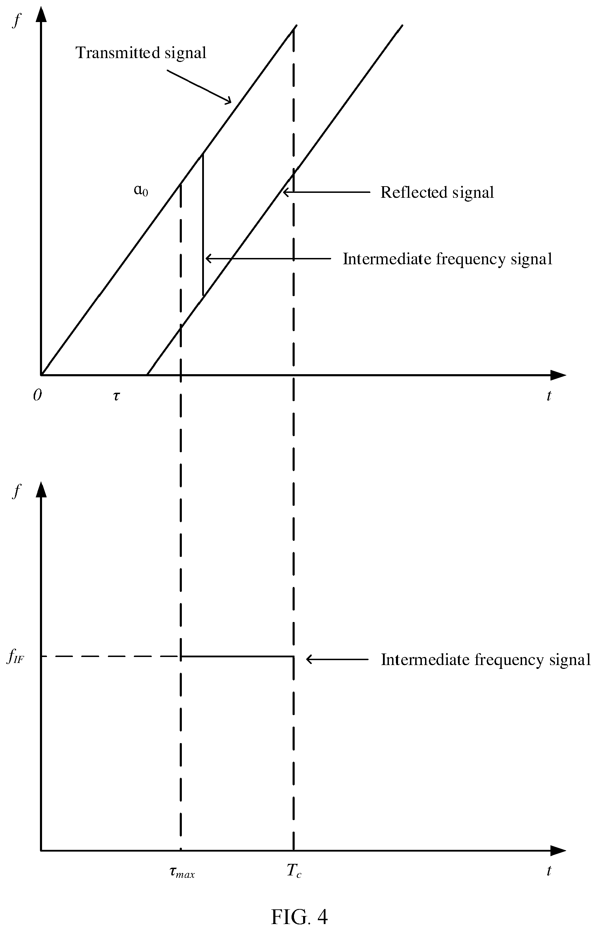

After the signal encounters an obstacle, the signal is reflected and then received by the millimeter-wave radar. A waveform of the transmitted signal is the same as that of a reflected signal, except that the waveform of the reflected signal has a delay *τ* relative to the waveform of the transmitted signal, as shown in FIG. 4. In FIG. 4, an echo signal is the reflected signal. A reflected signal of the frequency modulated continuous wave of the n^{th} period may be expressed as follows: $\begin{matrix}{S}_{RF , n}^{Rx} \left(t\right) = A ′ exp \left\{j2π\left[\frac{{a}_{0}}{2}{\left(t-{nT}_{c}-τ\right)}^{2}+{φ}_{0}\right]\right\} exp \left[j2π\left({f}_{c}+{b}_{0}\right)\left(t-τ\right)\right] \\ τ + {nT}_{c} \leq t < τ + \left(n+1\right) {T}_{c} , n = 0 , 1 , 2 , … , N - 1\end{matrix}$

A' represents an amplitude of a signal obtained after the equivalent baseband signal transmitted by the oscillator undergoes a transmit antenna gain, target reflection, a propagation loss, and a receive antenna gain, *τ* represents a delay between a moment at which a transmitter of the millimeter-wave radar sends the radar signal and a moment at which a receiver of the millimeter-wave radar receives the echo signal (namely, the reflected signal), as shown in FIG. 4, and the delay is two times of a distance divided by a speed of light. In addition, in FIG. 4, *τₘₐₓ* represents an echo delay corresponding to a maximum detection distance of the millimeter-wave radar. In other words, *τₘₐₓ* is a delay of the reflected signal received by the millimeter-wave radar relative to the transmitted signal when a distance between the millimeter-wave radar and the target object is a maximum distance that can be detected by the millimeter-wave radar. A relationship between *τ* and a target distance *d* may be expressed as follows: $τ = {τ}_{0} + \frac{2 νt}{c}$

*τ*₀ is a radar echo delay caused by a reference distance, *v* is a radial relative velocity between the target and the radar, and *c* is the speed of light. Considering that the speed *v* is far less than the speed of light *c*, for the baseband signal, the second item in the foregoing formula makes little contribution in subsequent detection, and therefore, the second item in the foregoing formula (1.5) is ignored in the baseband signal. However, in a carrier, the second item in the foregoing formula plays a key role in speed detection, and therefore, the second item is reserved, and the following is obtained: $\begin{matrix}{S}_{RF , n}^{Rx} \left(t\right) \approx A ′ exp \left\{j2π\left[\frac{{a}_{0}}{2}{\left(t-{nT}_{c}-{τ}_{0}\right)}^{2}+{φ}_{0}\right]\right\} exp \left[j2π\left({f}_{c}+{b}_{0}\right)\left(t-τ\right)\right] \\ τ + {nT}_{c} \leq t < τ + \left(n+1\right) {T}_{c} , n = 0 , 1 , 2 , … , N - 1\end{matrix}$

The frequency mixer of the millimeter-wave radar performs frequency mixing on the received signal and the local oscillator signal, and outputs an intermediate frequency signal after processing by the low-pass filter. The intermediate frequency signal is expressed as follows: $\begin{matrix}{S}_{IF , n}^{Rx} \left(t\right) = \frac{1}{A} {S}_{RF , n}^{Tx} \left(t\right) \times \left[{S}_{RF , n}^{Rx}\left(t\right)\right] * \\ {⇒}^{u = t - {nT}_{c}} {S}_{IF , n}^{Rx} \left(u\right) = A ′ \times exp \left(j{Φ}_{n}\right) \times exp \left\{j2π\left[\left({a}_{0}{τ}_{0}+{f}_{d}\right)u\right]\right\} \\ τ \leq u \leq {T}_{c}\end{matrix}$${Φ}_{n} = 2 π \left.\left[\left({f}_{c}+{b}_{0}\right){τ}_{0}-\frac{{a}_{0}}{2}{{τ}_{0}}^{2}+{f}_{d}{nT}_{c}\right]\right\} , {f}_{d} = \left({f}_{c}+{b}_{0}\right) \frac{2 ν}{c} ,$ and *f_{d}* is a Doppler frequency formed by the radial relative velocity of the target and the detection radar. After an intermediate frequency signal in the n^{th} period is sampled through an ADC, an intermediate frequency sampling signal is obtained. After the intermediate frequency sampling signal is sent to the processor for Fourier transform, an intermediate frequency *f_{IF}* may be obtained. ${f}_{IF} = {a}_{0} {τ}_{0} + {f}_{d}$

Generally, *f_{d}* << *a*₀*τ*₀*,* and therefore, *f_{IF} ≈a*₀*τ*₀*.* Then, the following is obtained. ${f}_{IF} \approx {a}_{0} ⋅ {τ}_{0} = \frac{B}{{T}_{c}} ⋅ \frac{2 d}{c}$

Therefore, the distance *d* between the millimeter-wave radar and the target is as follows: $d = \frac{c ⋅ {T}_{c}}{2 B} {f}_{IF}$

The foregoing derivation is performed based on one target, and the foregoing principle is also applicable to a plurality of targets. In other words, a plurality of intermediate frequency signals are obtained after frequency mixing, and intermediate frequencies respectively corresponding to the plurality of targets may be obtained after the plurality of intermediate frequency signals are sent to the processor for Fourier transform.

It can be learned from the foregoing deduction process that there is a linear relationship between a delay and a frequency difference (namely, the frequency of the intermediate frequency signal) between the transmitted signal and the received signal: A longer distance of the target indicates a later time of receiving the reflected signal, and therefore indicates a larger frequency difference between the reflected signal and the transmitted signal. Therefore, the distance between the radar and the target may be determined by determining the frequency of the intermediate frequency signal. In addition, the foregoing process of processing the radar signal is merely an example, and a specific radar processing process is not limited.

For speed detection, it can be learned from formula 1.7 that, a phase difference between intermediate frequency signals of two adjacent periods at a same time sampling point is a fixed value, that is: $ΔΦ = {Φ}_{n + 1} - {Φ}_{n} = 2 {πf}_{d} {T}_{c}$

When Fourier transform is performed on phase sequences of echo intermediate frequency signals of a plurality of successive periods at a same time sampling point, a Doppler frequency *f_{d}* can be obtained, and a relationship between the Doppler frequency *f_{d}* and a target radial relative speed v may be expressed as: ${f}_{d} = \left({f}_{c}+{b}_{0}\right) \frac{2 ν}{c} = \frac{2 ν}{λ}$

*λ* is a radar signal wavelength.

Therefore, the radial relative velocity *v* between the radar and the target is as follows: $ν = \frac{{λf}_{d}}{2}$

As more in-vehicle radars are used, mutual interference between the in-vehicle radars becomes more severe. Consequently, a radar detection probability is greatly reduced or a false alarm probability of radar detection is increased, posing a non-negligible impact on driving safety and comfort.

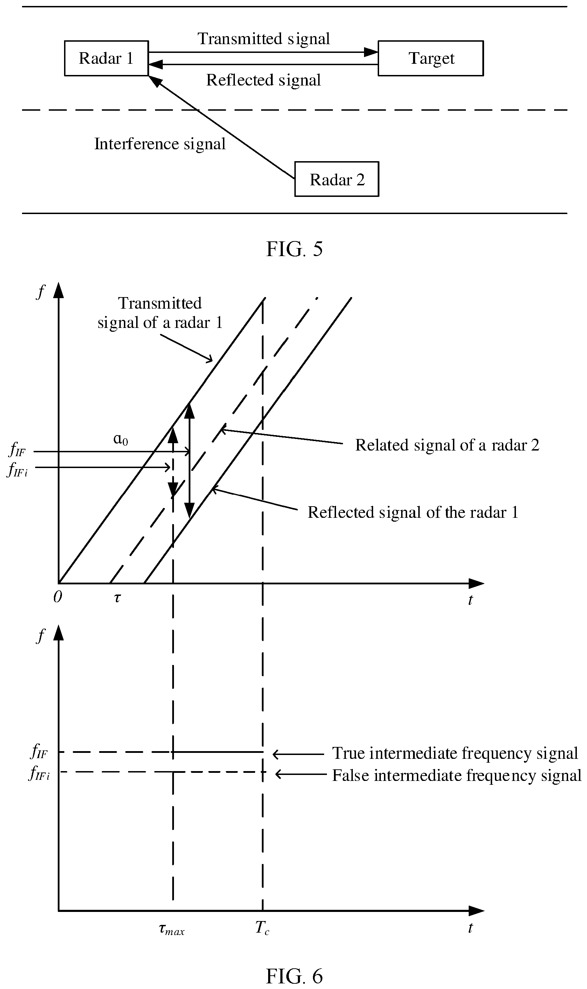

FIG. 5 is a schematic diagram of mutual interference between in-vehicle radars. A radar 1 sends a transmitted signal, and receives a reflected signal obtained after the transmitted signal is reflected by a target. When the radar 1 receives the reflected signal, a receive antenna of the radar 1 also receives a transmitted signal or a reflected signal of a radar 2. In this case, the transmitted signal of the radar 2 or the reflected signal of the radar 2 that is received by the radar 1 is an interference signal for the radar 1.

For example, it is assumed that the radar 1 is an observation radar, a slope of a frequency modulated continuous wave of the radar 1 is *a*₀, an intercept is *b*₀, and a period is T_{c}. The radar 2 is an interference radar, a slope of a frequency modulated continuous wave of the radar 2 is *a*₁, and an intercept is *b*₁. In this case, it is assumed that *b*₀=*b*₁*.* An echo delay corresponding to a maximum ranging distance of the radar 1 is τ*ₘₐₓ* (To be specific, a delay calculated by substituting the maximum detection distance of the radar into formula 1.6). For example, if the maximum detection distance of the radar is 250 m, the delay calculated by using formula 1.6 is 1.67µs). A delay of the interference signal of the radar 2 that arrives at the receiver of the radar 1 is *τ*₁. It is considered that a timing error existing at a radar transmit moment is Δ*τ* (for example, a transmit moment error generated due to a timing error of a global positioning system (Global Positioning System, GPS), for example, 60 ns). A time interval in which the radar detects a received signal is *τₘₐₓ* to T_{c}.

If a slope of a radar signal sent by the radar 1 is consistent with a slope of a radar signal sent by the radar 2, that is, *a*₀*=a*₁*,* and operating bands of the two radar signals overlap, a false alarm occurs. In this case, an intermediate frequency signal formed at the receiver of the radar is as follows: $\begin{matrix}{S}_{IF , n}^{Rx , i} \left(u\right) \\ = {A}_{i}^{′} \times exp \left(j{Φ}_{n}^{i}\right) \times exp \left\{j2π\left[\left({a}_{0}{τ}_{i}+{f}_{d}^{i}\right)u\right]\right\} \\ , {τ}_{i} \leq u < {T}_{c}\end{matrix}$${Φ}_{n}^{i} = 2 π \left({f}_{c}{τ}_{i}-\frac{{a}_{0}}{2}{τ}_{i}^{2}+{b}_{0}{τ}_{i}+{φ}_{0}-{φ}_{i}+{f}_{d}^{i}{nT}_{c}\right) ;$ is a signal amplitude of an interference radar signal formed after the interference radar signal undergoes a transmit antenna gain, target reflection, a propagation loss, and a receive antenna gain; i is an initial phase of the interference radar signal; ${f}_{d}^{i}$ is a Doppler frequency formed by the interference radar signal due to a radial relative velocity of the target and the detection radar; and *τᵢ* is a delay from a moment at which the transmitter transmits the interference radar signal to a moment at which the receiver receives the interference radar signal.

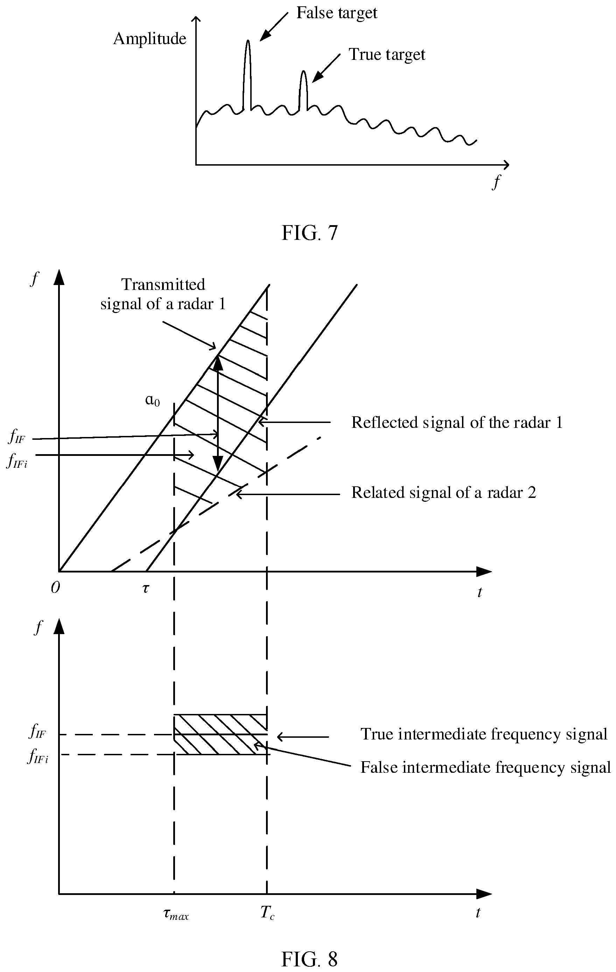

FIG. 6 and FIG. 7 are schematic diagrams of a possible false intermediate frequency signal. As shown in FIG. 6, the radar 1 transmits a signal to a target, and receives a reflected signal from the target. However, in a time range between a moment at which the radar 1 transmits the signal and a moment at which the radar 1 receives the reflected signal, the receive antenna of the radar 1 receives a transmitted signal or a reflected signal (a dashed line) of the radar 2. A signal waveform of the radar 1 is consistent with a signal waveform of the radar 2, and frequency scanning bandwidths of the two radars are the same. Within a target echo observation range of the radar 1, the radar 1 receives the signal (shown by the dashed line) of a corresponding frequency. In this case, the radar 1 considers that a "target 1" exists. The radar 1 detects the signal shown by the dashed line and a reflected signal shown by a solid line within a time interval (τₘₐₓ to T_{c}) for signal processing. In this case, the radar 1 mistakenly considers the received signal shown by the dashed line as a reflected signal of an object existing ahead. In this case, a false intermediate frequency signal is generated. The radar 1 may find two peaks through spectrum analysis after performing fast Fourier transform. As shown in FIG. 7, each peak corresponds to one target. The radar 1 considers that the "target 1" and a "target 2" exist simultaneously. The radar 1 mistakenly considers that the "target 1" exists ahead. Actually, the "target 1" does not exist. This is referred to as a "ghost" or a "false alarm". After the false alarm occurs, an autonomous vehicle slows down or brakes suddenly when there is no object in front. Consequently, driving comfort is reduced.

If there is a difference between the slope of the radar signal sent by the radar 1 and the slope of the radar signal sent by the radar 2, that is, *a*₀ ≠ *a*₁*,* missing detection occurs.

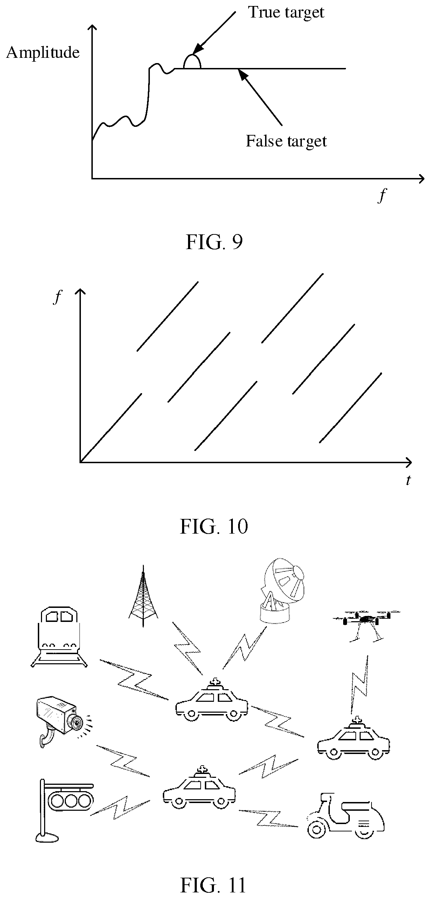

FIG. 8 and FIG. 9 are schematic diagrams showing that a possible interference signal drowns a target signal. As shown in FIG. 8, the radar 1 transmits a signal to a target, and receives a reflected signal from the target. However, in the target echo observation range of the radar 1, the receive antenna of the radar 1 receives a transmitted signal or a reflected signal (dashed line) of the radar 2. There is a difference between a slope of the signal waveform of the radar 1 and a slope of the signal waveform of the radar 2. In a time interval (τₘₐₓ to T_{c}) for signal detection, the radar 1 detects both the reflected signal of the radar 1 and a related signal of the radar 2. After frequency mixing is performed on the detected related signal of the radar 2 and the reflected signal of the radar 1, an intermediate frequency signal containing various frequency components is generated. $\begin{matrix}{S}_{IF , n}^{Rx , i} \left(u\right) \\ = {A}_{i}^{′} \times exp \left(j{Φ}_{n}^{i}\right) \times exp \left\{j2π\left[\left(\frac{{a}_{0} - {a}_{i}}{2}\right){u}^{2}+\left({a}_{i}{τ}_{i}+{f}_{d}^{i}\right)u\right]\right\} \\ , {τ}_{i} \leq u < {T}_{c} , n = 0 , 1 , … , N - 1\end{matrix}$

Herein, ${Φ}_{n}^{i} = 2 π \left({f}_{c}{τ}_{i}-\frac{{a}_{i}}{2}{τ}_{i}^{2}+{b}_{0}{τ}_{i}+{φ}_{0}-{φ}_{i}+{f}_{d}^{i}{nT}_{c}\right) .$

After fast Fourier transform, as shown in FIG. 9, an interference platform appears. As a result, a "protrusion" degree of a true target is not enough, which makes detection difficult and increases a possibility of missing detection. After missing detection occurs, when there is an object in front of an autonomous vehicle, the autonomous vehicle mistakenly considers that there is no object, and does not decelerate or brake. Consequently, a traffic accident is caused, and vehicle driving safety is reduced.

Therefore, for comfort and safety of vehicle driving, reducing interference between in-vehicle radars is a problem that has to be resolved.

In a possible solution, a radar frequency agility technology may be used, that is, a frequency of a radar waveform is rapidly changed, to prevent interference between a plurality of radars. As shown in FIG. 10, an effect of reducing a mutual interference probability can be achieved by applying frequency agility (random frequency hopping) to the radars. Although this manner has the effect of reducing the mutual interference probability to some extent, a radar cannot perform speed measurement by using a simple digital signal processing method (for example, fast Fourier transform (Fast Fourier Transform, FFT)), limiting a function of the radar.

In view of this, the technical solutions in embodiments of this application are provided. In an embodiment of this application, a radar time-frequency hopping waveform is designed. There is an association relationship between a time domain position and a corresponding frequency domain position in each frequency modulated continuous wave transmitted by a radar. For example, a product of the time domain position and the corresponding frequency domain position meets a preset condition. In this way, the radar may determine, by using a designed waveform, a time domain position and a frequency domain position of each frequency modulated continuous wave sent by the radar. In addition to reducing a probability of mutual interference between radars, a simple digital signal processing method (for example, FFT) may be used for speed measurement.

It may be understood that the technical solutions in embodiments of this application may be applied to an in-vehicle radar system, or may be applied to another radar system. This application is applicable to all radar systems provided that interaction between radars exists in the system. The radar may be a millimeter-wave radar, or may be another radar. This is not limited in this application.

FIG. 11 is a schematic diagram of a possible application scenario of an embodiment of this application. The foregoing application scenario may be self-driving, autonomous driving, intelligent driving, connected driving, or the like. A radar may be installed on a motor vehicle (for example, an uncrewed vehicle, a smart vehicle, an electric vehicle, or a digital vehicle), an uncrewed aerial vehicle, a track vehicle, a bicycle, a signal light, a speed measurement apparatus, a network device (for example, a base station or a terminal device in various systems), or the like. Further, in addition to the radar, a processing apparatus and a communication apparatus may be further installed on these apparatuses. Embodiments of this application are applicable to a radar between vehicles, and are further applicable to a radar between a vehicle and another apparatus, for example, an uncrewed aerial vehicle, or a radar between other apparatuses. In addition, the radar, the processing apparatus, and the communication apparatus may be installed on a mobile device. For example, the radar is installed on a vehicle as an in-vehicle radar. Alternatively, the radar, the processing apparatus, and the communication apparatus may be installed on a fastened device, for example, installed on a device like a roadside unit (road side unit, RSU). Installation positions and functions of the radar, the processing apparatus, and the communication apparatus are not limited in this embodiment of this application.

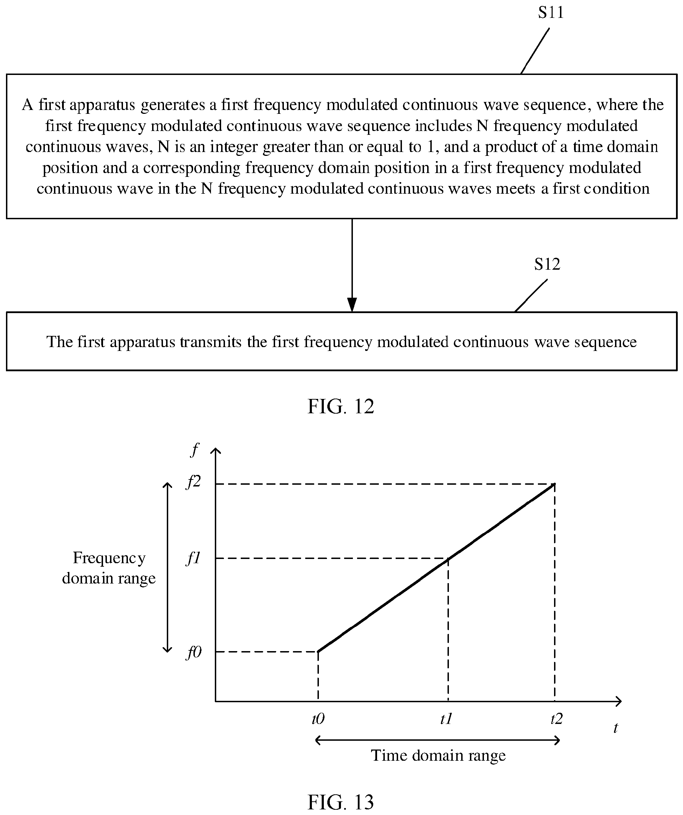

An embodiment of this application provides a signal sending method. FIG. 12 is a flowchart of the method. The method provided in the embodiment shown in FIG. 12 may be performed by a first apparatus. The first apparatus is, for example, a radar (or referred to as a radar apparatus), or the first apparatus may be a chip installed in a communication device. The communication device is, for example, a radar (or a radar apparatus), or another device. This is not limited in this application.

S11: The first apparatus generates a first frequency modulated continuous wave sequence, where the first frequency modulated continuous wave sequence includes N frequency modulated continuous waves, N is an integer greater than or equal to 1, and a product of a time domain position and a corresponding frequency domain position in a first frequency modulated continuous wave in the N frequency modulated continuous waves meets a first condition.

The first frequency modulated continuous wave may be any one of the N frequency modulated continuous waves. This is not limited in this application.

As described above, a frequency modulated continuous wave is a signal whose frequency changes linearly with time. In the following, for ease of description, duration (namely, a period of time from a start to an end of the frequency modulated continuous wave) of the frequency modulated continuous wave is referred to as a time domain range of the frequency modulated continuous wave, and a frequency change range (namely, a bandwidth) of the frequency modulated continuous wave is referred to as a frequency domain range of the frequency modulated continuous wave. For example, FIG. 13 is a time domain range [t1, t2] and a frequency domain range [f1, f2] of one frequency modulated continuous wave. It may be understood that the time domain range, the frequency domain range, and a linear relationship between a frequency and time of the frequency modulated continuous wave shown in FIG. 13 are merely examples, but are not specific limitations.

A time domain position in the first frequency modulated continuous wave may be any time domain position in the time domain range of the first frequency modulated continuous wave, for example, a start time domain position (namely, a start time of the first frequency modulated continuous wave), an end time domain position (namely, an end time of the first frequency modulated continuous wave), a center time domain position (namely, an intermediate time between the start time and the end time of the first frequency modulated continuous wave), or another time domain position. This is not limited in this application. For example, the first frequency modulated continuous wave is the frequency modulated continuous wave shown in FIG. 13, and the time domain range of the first frequency modulated continuous wave is [t0, t2]. Therefore, the start time domain position of the first frequency modulated continuous wave is t0, the center time domain position is (t0 + t2)/2, and the end time domain position is t2.

Because the frequency modulated continuous wave is a signal whose frequency linearly changes with time, there is a one-to-one correspondence between a time domain position in the time domain range of the first frequency modulated continuous wave and a frequency domain position in the frequency domain range of the first frequency modulated continuous wave. In other words, a corresponding frequency domain position can be found in the frequency domain range of the first frequency modulated continuous wave for each time domain position in the time domain range of the first frequency modulated continuous wave, or a corresponding time domain position can be found in the time domain range of the first frequency modulated continuous wave for each frequency domain position in the frequency domain range of the first frequency modulated continuous wave. For example, the first frequency modulated continuous wave is the frequency modulated continuous wave shown in FIG. 13. A frequency domain position corresponding to the start time domain position t0 in the first frequency modulated continuous wave is f0, a frequency domain position corresponding to the end time domain position t2 is f2, and a frequency domain position corresponding to a time domain position t1 (t1 is a time domain position between the start time domain position t0 and the end time domain position t2) is f1.

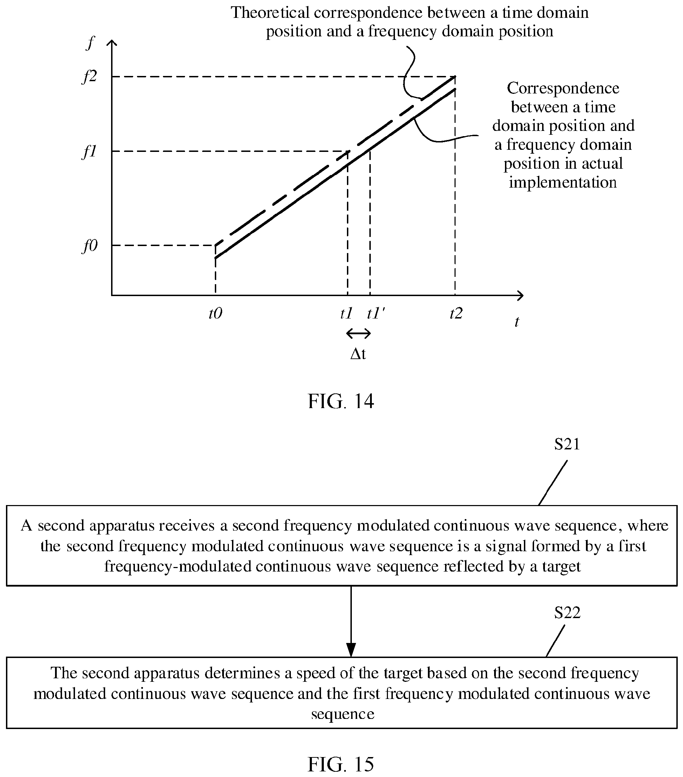

It should be noted that, in actual product implementation, there may be an error within a specific range in a correspondence between a time domain position and a frequency domain position. For example, as shown in FIG. 14, based on a linear relationship between a frequency and time of the frequency modulated continuous wave, a time domain position corresponding to the frequency domain position f1 should be t1. However, because a value of t1 has a decimal part and the decimal part is an infinite non-cyclic decimal, accurate product implementation is difficult. Therefore, the time domain position corresponding to the frequency domain position f1 may be shifted to t1' near t1, where a deviation between t1 and t1' is Δt. Then, the time domain position corresponding to the frequency domain position f1 is t1', where a value of t1' is an integer, or a value of t1' has a decimal part, and the decimal part is a finite decimal. It should be understood that the foregoing is merely an example rather than a specific limitation. In actual application, there may be another cause of the error. This is not limited in this application.

In a possible implementation, the first condition is related to a position of the first frequency modulated continuous wave in the N frequency modulated continuous waves. Further, for each frequency modulated continuous wave in the N frequency modulated continuous waves, a product of a time domain position and a corresponding frequency domain position of the frequency modulated continuous wave may meet a specific condition. Conditions that are met by products of time domain positions and corresponding frequency domain positions of different frequency modulated continuous waves may be different, and a condition met by a product of a time domain position and a corresponding frequency domain position of each frequency modulated continuous wave is related to a position of the frequency modulated continuous wave in the N frequency modulated continuous waves.

According to the invention, the first condition is a preset value, that is, the product of the time domain position and the corresponding frequency domain position in the first frequency modulated continuous wave is a preset value. The preset value may be obtained through calculation based on the position of the first frequency modulated continuous wave in the N frequency modulated continuous waves. Products of time domain positions and corresponding frequency domain positions of different frequency modulated continuous waves of the N frequency modulated continuous waves may be different preset values.

For example, the first condition may include: ${T}_{n} = \frac{α + nβ}{{f}_{n}}$

n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters.

Values of α and β can be configured based on a hardware capability and target detection performance indicators of the radar. Optionally, in one frame, α and β use fixed parameter values, and different frames may use different parameter values. Correspondingly, a value of N may be a quantity of frequency modulated continuous waves transmitted by the first apparatus in one frame.

It may be understood that, in actual application, the first condition may alternatively be a variation of the foregoing formula 1.16. For example, considering that there may be an error within a specific range in the correspondence between the time domain position and the frequency domain position, the foregoing formula 1.16 may be further transformed into: ${T}_{n} = \frac{α + nβ}{{f}_{n}} + {Δt}_{n}$

Δtₙ is a time deviation caused by an error during product implementation, and when values of n are different, values of Δtₙ may be the same or different; or ${f}_{n} = \frac{α + nβ}{{T}_{n}} + {Δf}_{n}$

Δfₙ is a frequency deviation caused by an error during product implementation, and when values of n are different, values of Δfₙ may be the same or different.

Certainly, formula 1.17 is merely an example. In an actual application, formula 1.16 may further have another variation. However, no matter how a form is transformed, formula 1.16 may be used as long as a function format that is the same as or similar to a function format of formula 1.16 can be transformed to.

In a possible design, waveforms of the N frequency modulated continuous waves may perform equal-interval frequency hopping in frequency domain. To be specific, frequency domain positions of the N frequency modulated continuous waves are distributed at an equal interval in frequency domain, and an interval between frequency domain positions of two adj acent frequency modulated continuous waves in the N frequency modulated continuous waves is a fixed value *x*₀.

Equal-interval frequency hopping may be specifically equal-interval increasing (for example, fₙ - fₙ₋₁ = *x*₀, where *x*₀ is a positive value), or may be equal-interval decreasing (for example, fₙ₋₁ - fₙ = x*₀*, where *x*₀ is a positive value). This is not limited in this application.

In this case, α and β can be set to the following parameters: $α = {f}_{c} {T}_{0}$ $β = \frac{\left({f}_{c}+N{x}_{0}\right) \left({f}_{c}+\left(N-1\right){x}_{0}\right) {T}_{c}}{{f}_{c}} + {T}_{0} {x}_{0}$

fₙ = f_{c} + n*x*₀; T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration (it should be noted that, for a time division multiplexing (Time Division Multiplexing, TDM) multi input multi output (Multi Input Multi Output, MIMO) radar, T_{c} is duration of each of a plurality of frequency modulated continuous waves transmitted by a same transmit antenna) of each of the plurality of frequency modulated continuous waves, where duration of the N frequency modulated continuous waves is the same (that is, duration from a start time to an end time is the same).

Similarly, in actual application, formula 1.19 and formula 1.20 may further have other variations, but no matter how a form is transformed, formula 1.19 and formula 1.20 may be used as long as function formats that are the same as or similar to function formats of formula 1.19 and formula 1.20 can be transformed to.

By using the parameter design of α and β, it can be ensured that two adjacent frequency modulated continuous waves (in time domain) do not overlap in time, and that the radar has a large speed measurement range.

In another possible design, the waveforms of the N frequency modulated continuous waves may perform random frequency hopping in frequency domain. For example, the first apparatus may determine a frequency domain position of each of the N frequency modulated continuous waves based on a frequency hopping capability of the radar. The first apparatus needs to select a frequency hopping range based on a capability of the radar (for example, if the radar can work only in a frequency band of 77 GHz to 78 GHz, a frequency of the frequency modulated continuous wave can only be within the 1 GHz range, and cannot exceed the range).

In this case, assuming that *nf*_{*n*-1} - (n - 1)*fₙ* > 0, where the assumed condition is generally true for an in-vehicle radar, α and β may be configured as the following parameters: $α = {f}_{c} {T}_{0}$ $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1$

T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, where duration of the N frequency modulated continuous waves is the same.

Similarly, in actual application, formula 1.21 and formula 1.22 may further have other variations, but no matter how a form is transformed, formula 1.21 and formula 1.22 may be used as long as function formats that are the same as or similar to function formats of formula 1.21 and formula 1.22 can be transformed to.

It should be noted that the design is not limited to a case in which random frequency hopping is applied, provided that a frequency domain position of each of the N frequency modulated continuous waves can be determined.

By using the parameter design of α and β, it can be ensured that two adjacent frequency modulated continuous waves (in time domain) do not overlap in time, and that the radar has a large speed measurement range.

In addition, in this embodiment of this application, "N frequency modulated continuous waves" may alternatively be described as "frequency modulated continuous waves of N periods". The N frequency modulated continuous waves are in a one-to-one correspondence with the N periods, and duration of each period is duration of a frequency modulated continuous wave corresponding to the period.

In this embodiment of this application, the first apparatus may determine a time domain position based on a frequency domain position (for example, first determine the frequency domain position of the first frequency modulated continuous wave, and then determine the time domain position of the first frequency modulated continuous wave based on the frequency domain position of the first frequency modulated continuous wave and the first condition), or may determine a frequency domain position based on a time domain position (for example, first determine the time domain position of the first frequency modulated continuous wave, and then determine the time domain position of the first frequency modulated continuous wave based on the time domain position of the first frequency modulated continuous wave and the first condition). This is not limited in this application. Similarly, for another frequency modulated continuous wave other than the first frequency modulated continuous wave in the first frequency modulated continuous wave sequence, a frequency domain position may be determined based on a time domain position, or a time domain position may be determined based on a frequency domain position. This is not limited in this application.

S12: The first apparatus transmits the first frequency modulated continuous wave sequence.

The foregoing describes a signal transmission process of a single radar. In a case in which a plurality of radars exist at the same time, each of the plurality of radars may transmit a signal by using the foregoing method.

During specific implementation, it is only required to ensure that signal waveforms corresponding to different radars correspond to different frequency domain positions in a same time domain position (that is, frequency domain resource collision between different radars at a same moment is avoided), so that mutual interference between the radars can be reduced or even eliminated. In addition, because each radar transmits a signal by using a designed waveform, a receiving apparatus corresponding to each radar may use a simple digital signal processing method (for example, FFT) for speed measurement, a probability of mutual interference between the radars can be reduced, and speed measurement performance of the radar is ensured.

The following describes a signal receiving process corresponding to the foregoing signal sending process (namely, steps S11 and S12).

An embodiment of this application provides a signal receiving method. FIG. 15 is a flowchart of the method. In the following description process, an example in which the method is applied to the network architecture shown in FIG. 15 is used. The method provided in the embodiment shown in FIG. 15 may be performed by a second apparatus. The second apparatus is, for example, a radar (or referred to as a radar apparatus), or the second apparatus may be a chip installed in a communication device. The communication device is, for example, a radar (or a radar apparatus), or another device. This is not limited in this application. The first apparatus and the second apparatus may be integrated into one chip, or may be separately integrated into different chips. This is not limited in this application.

S21: The second apparatus receives a second frequency modulated continuous wave sequence, where the second frequency modulated continuous wave sequence is a signal formed after a first frequency modulated continuous wave sequence is transmitted by a first apparatus, propagated through space, and reflected by a target.

For the first frequency modulated continuous wave sequence, refer to the foregoing description. Details are not described herein again.

It may be understood that, after the first frequency modulated continuous wave sequence is transmitted from the first apparatus, the first frequency modulated continuous wave sequence is propagated in space, and after encountering an obstacle, the first frequency modulated continuous wave sequence is reflected by the obstacle (for example, a target). Then, the first frequency modulated continuous wave sequence is propagated in space, and is received by a receive antenna of the second apparatus. A waveform of a signal changes to a certain extent after the signal undergoes target reflection, a propagation loss, and the like. Therefore, a signal (namely, the first frequency modulated continuous wave sequence) transmitted by the first apparatus may be different from a signal (namely, the second frequency modulated continuous wave sequence) received by the second apparatus. For example, there is a delay in a waveform of the second frequency modulated continuous wave sequence relative to a waveform of the first frequency modulated continuous wave sequence. For a specific expression form, refer to the foregoing formula 1.3 and formula 1.4. Details are not described herein again.

S22: The second apparatus determines information about the target based on the second frequency modulated continuous wave sequence and the first frequency modulated continuous wave sequence.

For example, the second apparatus performs frequency mixing on the second frequency modulated continuous wave sequence and the first frequency modulated continuous wave sequence to obtain an intermediate frequency signal sequence; and then processes the intermediate frequency signal sequence by using a simple digital signal processing method, and performs parameter estimation on the target, so that related information such as a speed, a distance, or an angle of the target can be obtained. Optionally, the simple digital signal processing method includes FFT.

It may be understood that, when performing signal processing, the second apparatus needs to compensate for a phase difference between two adjacent frequency modulated continuous waves (or frequency modulated continuous waves of two adj acent periods) in the second frequency modulated continuous wave sequence caused by a distance, to obtain a more accurate target speed.

The foregoing case in which the frequency domain positions of the N frequency modulated continuous waves are distributed at an equal interval in frequency domain is used as an example. When a frequency domain interval between two adjacent frequency modulated continuous waves is *x*₀, a phase difference between two adjacent intermediate frequency signals is $ΔΦ = 2 {πx}_{0} {τ}_{0} + 2 π \frac{2 {v}_{0}}{c} β$. When a parameter that needs to be estimated is v₀, it can be learned from related derivation content described in the foregoing formula 1.11, formula 1.12, and the like that, only when a phase difference of intermediate frequency signals of two adjacent periods at a same time sampling point is a fixed value, ΔΦ can be obtained by processing the intermediate frequency signals through FFT. Therefore, in this embodiment of this application, an impact on a phase ΔΦ by 2πx₀τ₀ needs to be eliminated, that is, phase compensation needs to be performed. Otherwise, correct v₀ cannot be estimated through FFT.

In a specific implementation process, the second apparatus may perform phase compensation after frequency mixing and low-pass filtering are performed to obtain an intermediate frequency sampling signal and distance information. More specifically, the first apparatus may perform phase compensation on the intermediate frequency signal sequence before speed detection, or directly compensate, for a speed detection result after speed detection, for a speed detection deviation caused by a distance. This is not limited in this application.

For example, an interval between frequency domain positions of two adjacent frequency modulated continuous waves in the N frequency modulated continuous waves is a fixed value x₀.

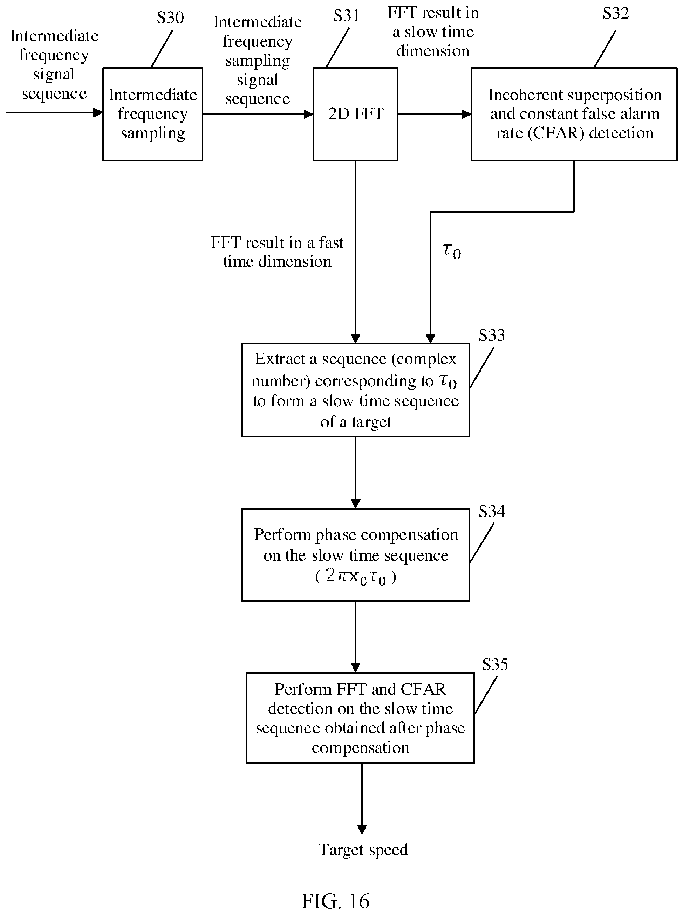

In a possible example, as shown in FIG. 16, a process of processing the intermediate frequency signal by the second apparatus may include the following steps.

S30: Perform sampling on the intermediate frequency signal sequence to obtain an intermediate frequency sampling signal sequence.

It may be understood that the intermediate frequency signal sequence herein refers to analog intermediate frequency signals of a plurality of periods, and the intermediate frequency sampling signal sequence herein refers to digital intermediate frequency sampling signals of a plurality of periods.

S31: Perform two-dimensional (2D) FFT processing on the intermediate frequency sampling signal sequence to obtain an FFT result in a slow time dimension and an FFT result in a fast time dimension.

2D FFT processing includes FFT processing in a distance dimension and FFT processing in a speed dimension, where the distance dimension is also referred to as a fast time dimension, and the speed dimension is also referred to as a slow time dimension.

FFT processing in the fast time dimension includes: performing FFT on an intermediate frequency sampling signal in each period.

FFT processing in the slow time dimension includes: performing FFT on intermediate frequency sampling signals in all periods at a same fast time sampling point position.

It may be understood that the two types of processing are generally performed in serial. For example, FFT in the fast time dimension is performed first, and then FFT in the slow time dimension is performed. Because through FFT in the fast time dimension, a target distance can be obtained, in this case, FFT in the slow time dimension is equivalent to performing FFT on intermediate frequency sampling signals in all periods at positions in a same distance after FFT in the fast time dimension. Certainly, in an actual operation, FFT in the slow time dimension may be performed first, and then FFT in the fast time dimension is performed. A sequence is not limited in this application.

S32: Perform incoherent superposition on the FFT result in the slow time dimension, and then obtain, through constant false alarm rate (Constant False Alarm Rate, CFAR) detection, a signal transmission delay caused by the target distance, namely, a target delay (that is, a delay experienced when a signal is transmitted from the first apparatus, reflected by the target, and finally received by the second apparatus).

S33: Extract a sequence (complex number) corresponding to τ₀ from the FFT result in the fast time dimension to form a slow time sequence (complex number array) of the target.

S34: After compensating for a phase difference (namely, 2πx₀τ₀ in $ΔΦ = 2 {πx}_{0} {τ}_{0} + 2 π \frac{2 {v}_{0}}{c} β$ ) between two adjacent frequency modulated continuous wave sequences caused by a distance for the slow time sequence, make $ΔΦ ′ = 2 π \frac{2 {v}_{0}}{c} β$, to obtain a slow time sequence obtained after phase compensation.

S35: Perform FFT on the slow time sequence obtained after phase compensation, and then perform CFAR (constant false alarm rate) detection to obtain a target speed.

It may be understood that the CFAR is merely an example. In actual application, the target speed may be determined in another manner. This is not limited in this application.

In this example, phase compensation is performed on the intermediate frequency signal sequence after frequency mixing and before speed detection, so that accuracy of speed detection can be improved.

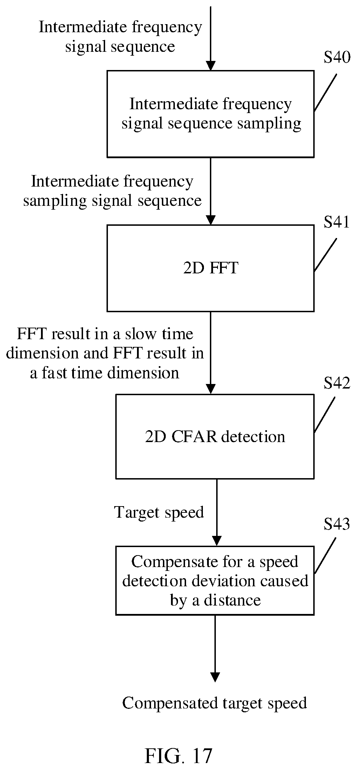

In another possible example, an example in which an interval between frequency domain positions of two adjacent frequency modulated continuous waves in the N frequency modulated continuous waves is a fixed value x₀ is used. As shown in FIG. 17, a process of processing the intermediate frequency signal by the second apparatus includes the following steps.

S40: Perform sampling on the intermediate frequency signal sequence to obtain an intermediate frequency sampling signal sequence.

S41: Perform two-dimensional (2D) FFT processing on the intermediate frequency sampling signal sequence to obtain an FFT result in a slow time dimension and an FFT result in a fast time dimension.

For a specific implementation process of S41, refer to S31. Details are not described herein again.

S42: Perform two-dimensional (2D) CFAR detection on the FFT result and the FFT result in the fast time dimension to obtain a target distance and a target speed.

2D CFAR is merely an example. In actual application, the target speed and the target distance may be determined in another method. This is not limited in this application.

It may be understood that the target distance may be obtained by using a speed conversion factor $\frac{c}{4 πβ}$ (obtained through FFT processing in the slow time dimension) multiplied by ΔΦ.

The target speed includes an error caused by a delay τ₀ and a frequency hopping interval x₀ that correspond to the target distance. For ease of description, the target speed is denoted as ${v}_{0}^{′} = \frac{c}{4 πβ} ΔΦ$ herein.

S43: Compensate the target speed for a speed detection deviation caused by a distance, and output a compensated target speed.

The speed detection deviation may be specifically obtained through calculation of 2π x₀τ₀.

For example, the compensated target speed *v₀* may be obtained by subtracting $\frac{{x}_{0} {τ}_{0} c}{2 β}$ from the target speed ${v}_{0}^{′}$ obtained in S42.

In this example, before speed detection, the speed detection deviation caused by the distance is compensated for the target speed, so that accuracy of speed detection can be improved.

It can be learned from the foregoing signal transmission process and signal receiving process that, because the radar transmits a signal to the outside by using a designed waveform when transmitting the signal, the radar can determine a time domain position and a frequency domain position of each frequency modulated continuous wave. In a signal receiving phase, a simple digital signal processing method (for example, FFT) may be used to perform speed measurement, so that a probability of mutual interference between radars can be reduced, and speed measurement performance of the radar can be ensured.

The foregoing describes the methods provided in embodiments of this application with reference to the accompanying drawings. The following describes apparatuses provided in embodiments of this application with reference to the accompanying drawings.

Based on a same technical concept, an embodiment of this application provides a signal sending apparatus. The apparatus includes modules/units/means configured to perform the method performed by the first apparatus in the foregoing method embodiments. The modules/units/means may be implemented by software, or may be implemented by hardware, or may be implemented by hardware executing corresponding software.

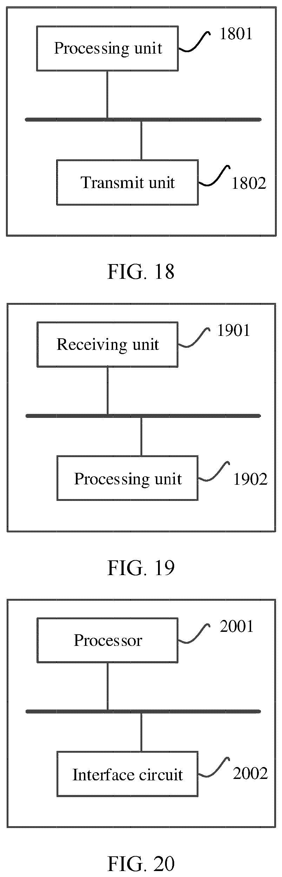

For example, as shown in FIG. 18, the apparatus may include:
a processing unit 1801, configured to generate a first frequency modulated continuous wave sequence; and
a transmit unit 1802, configured to transmit the first frequency modulated continuous wave sequence, where the first frequency modulated continuous wave sequence includes N frequency modulated continuous waves, and N is an integer greater than or equal to 1.

A product of a time domain position and a corresponding frequency domain position in a first frequency modulated continuous wave in the N frequency modulated continuous waves meets a first condition.

The transmit unit 1802 may be a transmitter (or a transceiver), a transmit antenna, or the like. The processing unit 1801 may be a processor.

Optionally, the first condition is related to a position of the first frequency modulated continuous wave in the N frequency modulated continuous waves.

Optionally, the frequency domain position includes a start frequency and/or a center frequency, and the time domain position includes a start time and/or a center time.

Optionally, the first condition may include: ${T}_{n} = \frac{α + nβ}{{f}_{n}}$

n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters.

Optionally, frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀.

Optionally, in a case of equal-interval frequency hopping, α and β may be configured as the following parameters: $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ where
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, where duration of the N frequency modulated continuous waves is the same.

Optionally, in a case of random frequency hopping, α and β may be configured as the following parameters: $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ where
*nf*_{*n*-1} - (n - 1)*fₙ* > 0; T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, where duration of the N frequency modulated continuous waves is the same.

It should be understood that all related content of the steps in the foregoing method embodiments may be cited in function descriptions of the corresponding function modules. Details are not described herein.

Based on a same technical concept, an embodiment of this application provides a signal receiving apparatus. The apparatus includes modules/units/means configured to perform the method performed by the second apparatus in the foregoing method embodiments. The modules/units/means may be implemented by software, or may be implemented by hardware, or may be implemented by hardware executing corresponding software.

For example, as shown in FIG. 19, the apparatus may include:
a receiving unit 1901, configured to receive a second frequency modulated continuous wave sequence, where the second frequency modulated continuous wave sequence is a signal formed after a first frequency modulated continuous wave sequence is transmitted by a first apparatus, propagated through space, and reflected by a target; and
a processing unit 1902, configured to determine information about the target based on the second frequency modulated continuous wave sequence and the first frequency modulated continuous wave sequence, where the information includes a speed and/or a distance.

The first frequency modulated continuous wave sequence includes N frequency modulated continuous waves, N is an integer greater than or equal to 1, and a product of a time domain position and a corresponding frequency domain position in a first frequency modulated continuous wave in the N frequency modulated continuous waves meets a first condition.

The receiving unit 1901 may be a receiver (or a transceiver), a receive antenna, or the like. The processing unit 1902 may be a processor.

Optionally, the first condition is related to a position of the first frequency modulated continuous wave in the N frequency modulated continuous waves.

Optionally, the frequency domain position includes a start frequency and/or a center frequency, and the time domain position includes a start time and/or a center time.

Optionally, the first condition may include: ${T}_{n} = \frac{α + nβ}{{f}_{n}}$

n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters.

Optionally, frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀.

Optionally, in a case of equal-interval frequency hopping, α and β may be configured as the following parameters: $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ where
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, where duration of the N frequency modulated continuous waves is the same.

Optionally, in a case of random frequency hopping, α and β may be configured as the following parameters: $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ where
*nf*_{*n*-1} - (*n* - 1)*fₙ* > 0; T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, where duration of the N frequency modulated continuous waves is the same.

Optionally, the processing unit 1902 is specifically configured to: determine an intermediate frequency signal sequence based on the second frequency modulated continuous wave sequence and the first frequency modulated continuous wave sequence; and process the intermediate frequency signal sequence through fast Fourier transform FFT.

Optionally, the processing unit 1902 may be configured to:
before processing the intermediate frequency signal sequence through FFT, perform phase compensation on the second frequency modulated continuous wave sequence or the intermediate frequency signal sequence based on the interval between frequency domain positions of the N frequency modulated continuous waves.

It should be understood that all related content of the steps in the foregoing method embodiments may be cited in function descriptions of the corresponding function modules. Details are not described herein.

During specific implementation, the apparatus provided in this embodiment of this application may have a plurality of product forms. The following describes several possible product forms.

Refer to FIG. 20. An embodiment of this application further provides a communication apparatus. The apparatus includes at least one processor 2001 and an interface circuit 2002. The interface circuit 2002 is configured to: receive a signal from another apparatus other than the apparatus and transmit the signal to the processor 2001, or send a signal from the processor 2001 to another communication apparatus other than the apparatus. The processor 2001 is configured to implement, by using a logic circuit or executing code instructions, the method performed by the first apparatus or the second apparatus.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Eate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another appropriate type.

Based on a same technical concept, an embodiment of this application further provides a computer-readable storage medium, including a program or instructions. When the program or the instructions are run on a computer, the method performed by the first apparatus or the second apparatus is performed.

Based on a same technical concept, an embodiment of this application further provides a computer program product, and the computer program product includes instructions. When the instructions are run on a computer, the method performed by the first apparatus or the second apparatus is performed.

Based on a same technical concept, an embodiment of this application further provides a radar system, including the foregoing signal sending apparatus and/or signal receiving apparatus.

Based on a same technical concept, an embodiment of this application further provides a terminal device, including the foregoing sending apparatus and/or signal receiving apparatus. The terminal device may be a vehicle, an uncrewed aerial vehicle, a helicopter, an aircraft, a ship, an intelligent transportation device, a smart home device, or the like. A specific form of the terminal device is not limited in embodiments of this application.

## Claims

1. A signal sending method, comprising:
generating (S21) a first frequency modulated continuous wave sequence; and
transmitting (S22) the first frequency modulated continuous wave sequence, wherein the first frequency modulated continuous wave sequence comprises N frequency modulated continuous waves, and N is an integer greater than or equal to 1, wherein
a product of a time domain position and a corresponding frequency domain position in a first frequency modulated continuous wave in the N frequency modulated continuous waves meets a first condition, wherein the first condition is a preset value, that is the product of the time domain position and the corresponding frequency domain position in the first frequency modulated continuous wave,
**characterized in that**, the first condition comprises: ${T}_{n} = \frac{α + nβ}{{f}_{n}} ,$ wherein
n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters,
and the frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀, and $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ wherein
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, wherein duration of the N frequency modulated continuous waves is the same.

2. The method according to claim 1, wherein the first condition is related to a position of the first frequency modulated continuous wave in the N frequency modulated continuous waves.

3. The method according to claim 1 or 2, wherein the frequency domain position comprises a start frequency or a center frequency, and the time domain position comprises a start time or a center time.

4. The method according to claim 1, wherein $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ wherein ${nf}_{n - 1} - \left(n-1\right) {f}_{n} > 0 ,$ and T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, wherein duration of the N frequency modulated continuous waves is the same.

5. A signal receiving method, comprising:
receiving a second frequency modulated continuous wave sequence, wherein the second frequency modulated continuous wave sequence is a signal formed after a first frequency modulated continuous wave sequence is transmitted by a first apparatus, propagated through space, and reflected by a target; and
determining information about the target based on the second frequency modulated continuous wave sequence and the first frequency modulated continuous wave sequence, wherein the information comprises a distance and/or a speed, wherein
the first frequency modulated continuous wave sequence comprises N frequency modulated continuous waves, N is an integer greater than or equal to 1, and a product of a time domain position and a corresponding frequency domain position in a first frequency modulated continuous wave in the N frequency modulated continuous waves meets a first condition, wherein the first condition is a preset value, that is the product of the time domain position and the corresponding frequency domain position in the first frequency modulated continuous wave,
**characterized in that**, the first condition comprises: ${T}_{n} = \frac{α + nβ}{{f}_{n}} ,$ wherein
n is a sequence number of a frequency modulated continuous wave in the N frequency modulated continuous waves, and n = 0, 1, 2, ..., N - 1; Tₙ is a time domain position of a frequency modulated continuous wave whose sequence number is n in the N frequency modulated continuous waves; fₙ is a frequency domain position of the frequency modulated continuous wave whose sequence number is n in the N frequency modulated continuous waves; and α and β are preset frequency hopping parameters,
and the frequency domain positions of the N frequency modulated continuous waves are distributed at an equal interval in frequency domain, and an interval between frequency domain positions of two adjacent frequency modulated continuous waves in the N frequency modulated continuous waves is a fixed value *x*₀, and $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ and ${f}_{n} = {f}_{c} + n {x}_{0} ,$ wherein
T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the plurality of frequency modulated continuous waves, wherein duration of the N frequency modulated continuous waves is the same.

6. The method according to claim 5, wherein the first condition is related to a position of the first frequency modulated continuous wave in the N frequency modulated continuous waves.

7. The method according to claim 5 or 6, wherein the frequency domain position comprises a start frequency or a center frequency, and the time domain position comprises a start time or a center time.

8. The method according to claim 5, wherein $α = {f}_{c} {T}_{0} ;$ and $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ wherein ${nf}_{n - 1} - \left(n-1\right) {f}_{n} > 0 ,$ and T₀ is a time domain position of a frequency modulated continuous wave whose sequence number is 0 in the N frequency modulated continuous waves; f_{c} is a frequency domain position of the frequency modulated continuous wave whose sequence number is 0 in the N frequency modulated continuous waves; and T_{c} is duration of each frequency modulated continuous wave in the N frequency modulated continuous waves, wherein duration of the N frequency modulated continuous waves is the same.

9. An apparatus, comprising means adapted to execute the method according to any one of claims 1 to 4 or any one of claims 5 to 8, wherein the means comprise a processor (2001) and an interface circuit (2002), wherein the interface circuit (2002) is configured to: receive a signal from a second apparatus other than the apparatus and transmit the signal to the processor (2001), or send a signal from the processor (2001) to a second apparatus other than the apparatus.

## Patentansprüche

1. Signalsendeverfahren, umfassend:
Erzeugen (S21) einer ersten frequenzmodulierten kontinuierlichen Wellensequenz; und
Übertragen (S22) der ersten frequenzmodulierten kontinuierlichen Wellensequenz, wobei die erste frequenzmodulierte kontinuierliche Wellensequenz N frequenzmodulierte kontinuierliche Wellen umfasst und N eine ganze Zahl größer als oder gleich 1 ist, wobei ein Produkt aus einer Zeitdomänenposition und einer entsprechenden Frequenzdomänenposition in einer ersten frequenzmodulierten kontinuierlichen Welle in den N frequenzmodulierten kontinuierlichen Wellen eine erste Bedingung erfüllt, wobei die erste Bedingung ein voreingestellter Wert ist, der das Produkt aus der Zeitdomänenposition und der entsprechenden Frequenzdomänenposition in der ersten frequenzmodulierten kontinuierlichen Welle ist,
**dadurch gekennzeichnet, dass** die erste Bedingung Folgendes umfasst: ${T}_{n} = \frac{α + nβ}{{f}_{n}} ,$ wobei
n eine Sequenznummer einer frequenzmodulierten kontinuierlichen Welle in den N frequenzmodulierten kontinuierlichen Wellen ist und n = 0, 1, 2, ..., N - 1; Tₙ eine Zeitdomänenposition einer frequenzmodulierten kontinuierlichen Welle ist, deren Sequenznummer n in den N frequenzmodulierten kontinuierlichen Wellen ist; fₙ eine Frequenzdomänenposition der frequenzmodulierten kontinuierlichen Welle ist, deren Sequenznummer n in den N frequenzmodulierten kontinuierlichen Wellen ist; und α und β voreingestellte Frequenzsprungparameter sind und die Frequenzdomänenpositionen der N frequenzmodulierten kontinuierlichen Wellen in einem gleichen Abstand in einer Frequenzdomäne verteilt sind und ein Abstand zwischen Frequenzdomänenpositionen zweier benachbarter frequenzmodulierter kontinuierlicher Wellen in den N frequenzmodulierten kontinuierlichen Wellen ein fester Wert x₀ ist und $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ und ${f}_{n} = {f}_{c} + n {x}_{0} ,$ wobei
T₀ eine Zeitdomänenposition einer frequenzmodulierten kontinuierlichen Welle ist, deren Sequenznummer 0 in den N frequenzmodulierten kontinuierlichen Wellen ist; f_{c} eine Frequenzdomänenposition der frequenzmodulierten kontinuierlichen Welle ist, deren Sequenznummer 0 in den N frequenzmodulierten kontinuierlichen Wellen ist; und T_{c} eine Dauer jeder frequenzmodulierten kontinuierlichen Welle in der Vielzahl frequenzmodulierter kontinuierlicher Wellen ist, wobei die Dauer der N frequenzmodulierten kontinuierlichen Wellen die gleiche ist.

2. Verfahren nach Anspruch 1, wobei sich die erste Bedingung auf eine Position der ersten frequenzmodulierten kontinuierlichen Welle in den N frequenzmodulierten kontinuierlichen Wellen bezieht.

3. Verfahren nach Anspruch 1 oder 2, wobei die Frequenzdomänenposition eine Startfrequenz oder eine Mittelfrequenz umfasst und die Zeitdomänenposition eine Startzeit oder eine Mittelzeit umfasst.

4. Verfahren nach Anspruch 1, wobei $α = {f}_{c} {T}_{0} ;$ und $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ wobei ${nf}_{n - 1} - \left(n-1\right) fn > 0$ und T₀ eine Zeitdomänenposition einer frequenzmodulierten kontinuierlichen Welle ist, deren Sequenznummer 0 in den N frequenzmodulierten kontinuierlichen Wellen ist; f_{c} eine Frequenzdomänenposition der frequenzmodulierten kontinuierlichen Welle ist, deren Sequenznummer 0 in den N frequenzmodulierten kontinuierlichen Wellen ist; und T_{c} die Dauer jeder frequenzmodulierten kontinuierlichen Welle in den N frequenzmodulierten kontinuierlichen Wellen ist, wobei die Dauer der N frequenzmodulierten kontinuierlichen Wellen die gleiche ist.

5. Signalempfangsverfahren, umfassend:
Empfangen einer zweiten frequenzmodulierten kontinuierlichen Wellensequenz, wobei die zweite frequenzmodulierte kontinuierliche Wellensequenz ein Signal ist, das gebildet wird, nachdem eine erste frequenzmodulierte kontinuierliche Wellensequenz durch eine erste Einrichtung übertragen, durch einen Raum hindurch verbreitet und durch ein Ziel reflektiert wurde; und
Bestimmen von Informationen über das Ziel basierend auf der zweiten frequenzmodulierten kontinuierlichen Wellensequenz und der ersten frequenzmodulierten kontinuierlichen Wellensequenz, wobei die Informationen eine Entfernung und/oder eine Geschwindigkeit umfassen, wobei
die erste frequenzmodulierte kontinuierliche Wellensequenz N frequenzmodulierte kontinuierliche Wellen umfasst, N eine ganze Zahl größer als oder gleich 1 ist und ein Produkt aus einer Zeitdomänenposition und einer entsprechenden Frequenzdomänenposition in einer ersten frequenzmodulierten kontinuierlichen Welle in den N frequenzmodulierten kontinuierlichen Wellen eine erste Bedingung erfüllt, wobei die erste Bedingung ein voreingestellter Wert ist, der das Produkt aus der Zeitdomänenposition und der entsprechenden Frequenzdomänenposition in der ersten frequenzmodulierten kontinuierlichen Welle ist,
**dadurch gekennzeichnet, dass** die erste Bedingung Folgendes umfasst: ${T}_{n} = \frac{α + nβ}{{f}_{n}} ,$ wobei
n eine Sequenznummer einer frequenzmodulierten kontinuierlichen Welle in den N frequenzmodulierten kontinuierlichen Wellen ist und n = 0, 1, 2, ..., N - 1; Tₙ eine Zeitdomänenposition einer frequenzmodulierten kontinuierlichen Welle ist, deren Sequenznummer n in den N frequenzmodulierten kontinuierlichen Wellen ist; fₙ eine Frequenzdomänenposition der frequenzmodulierten kontinuierlichen Welle ist, deren Sequenznummer n in den N frequenzmodulierten kontinuierlichen Wellen ist; und α und β voreingestellte Frequenzsprungparameter sind und die Frequenzdomänenpositionen der N frequenzmodulierten kontinuierlichen Wellen in einem gleichen Abstand in einer Frequenzdomäne verteilt sind und ein Abstand zwischen Frequenzdomänenpositionen zweier benachbarter frequenzmodulierter kontinuierlicher Wellen in den N frequenzmodulierten kontinuierlichen Wellen ein fester Wert x₀ ist und $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ und ${f}_{n} = {f}_{c} + n {x}_{0} ,$ wobei
T₀ eine Zeitdomänenposition einer frequenzmodulierten kontinuierlichen Welle ist, deren Sequenznummer 0 in den N frequenzmodulierten kontinuierlichen Wellen ist; f_{c} eine Frequenzdomänenposition der frequenzmodulierten kontinuierlichen Welle ist, deren Sequenznummer 0 in den N frequenzmodulierten kontinuierlichen Wellen ist; und T_{c} eine Dauer jeder frequenzmodulierten kontinuierlichen Welle in der Vielzahl frequenzmodulierter kontinuierlicher Wellen ist, wobei die Dauer der N frequenzmodulierten kontinuierlichen Wellen die gleiche ist.

6. Verfahren nach Anspruch 5, wobei sich die erste Bedingung auf eine Position der ersten frequenzmodulierten kontinuierlichen Welle in den N frequenzmodulierten kontinuierlichen Wellen bezieht.

7. Verfahren nach Anspruch 5 oder 6, wobei die Frequenzdomänenposition eine Startfrequenz oder eine Mittelfrequenz umfasst und die Zeitdomänenposition eine Startzeit oder eine Mittelzeit umfasst.

8. Verfahren nach Anspruch 5, wobei $α = {f}_{c} {T}_{0} ;$ und $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ wobei ${nf}_{n - 1} - \left(n-1\right) {f}_{n} > 0$ und T₀ eine Zeitdomänenposition einer frequenzmodulierten kontinuierlichen Welle ist, deren Sequenznummer 0 in den N frequenzmodulierten kontinuierlichen Wellen ist; f_{c} eine Frequenzdomänenposition der frequenzmodulierten kontinuierlichen Welle ist, deren Sequenznummer 0 in den N frequenzmodulierten kontinuierlichen Wellen ist; und T_{c} die Dauer jeder frequenzmodulierten kontinuierlichen Welle in den N frequenzmodulierten kontinuierlichen Wellen ist, wobei die Dauer der N frequenzmodulierten kontinuierlichen Wellen die gleiche ist.

9. Einrichtung, umfassend Mittel, die dazu angepasst sind, das Verfahren nach einem der Ansprüche 1 bis 4 oder einem der Ansprüche 5 bis 8 auszuführen, wobei die Mittel einen Prozessor (2001) und eine Schnittstellenschaltung (2002) umfassen, wobei die Schnittstellenschaltung (2002) zu Folgendem konfiguriert ist: Empfangen eines Signals von einer zweiten Einrichtung, die eine andere als die Einrichtung ist, und Übertragen des Signals an den Prozessor (2001) oder Senden eines Signals von dem Prozessor (2001) an eine zweite Einrichtung, die eine andere als die Einrichtung ist.

## Revendications

1. Procédé d'envoi de signal, comprenant :
la génération (S21) d'une première séquence d'ondes continues modulées en fréquence ; et
la transmission (S22) de la première séquence d'ondes continues modulées en fréquence, dans lequel la première séquence d'ondes continues modulées en fréquence comprend N ondes continues modulées en fréquence, et N est un entier supérieur ou égal à 1,
dans lequel
un produit d'une position dans le domaine temporel et d'une position correspondante dans le domaine fréquentiel dans une première onde continue modulée en fréquence parmi les N ondes continues modulées en fréquence satisfait une première condition,
dans lequel la première condition est une valeur prédéfinie, c'est-à-dire le produit de la position dans le domaine temporel et de la position correspondante dans le domaine fréquentiel dans la première onde continue modulée en fréquence,
**caractérisé en ce que**, la première condition comprend : ${T}_{n} = \frac{α + nβ}{{f}_{n}} ,$ dans lequel
n représente un numéro de séquence d'une onde continue modulée en fréquence parmi les N ondes continues modulées en fréquence, et n = 0, 1, 2, ..., N - 1 ; Tₙ représente une position dans le domaine temporel d'une onde continue modulée en fréquence dont le numéro de séquence est n parmi les N ondes continues modulées en fréquence ; fₙ représente une position dans le domaine fréquentiel de l'onde continue modulée en fréquence dont le numéro de séquence est n parmi les N ondes continues modulées en fréquence ; et α et β sont des paramètres de saut de fréquence prédéfinis,
et les positions dans le domaine fréquentiel des N ondes continues modulées en fréquence sont distribuées à intervalles égaux dans le domaine fréquentiel, et un intervalle entre des positions dans le domaine fréquentiel de deux ondes continues modulées en fréquence adjacentes parmi les N ondes continues modulées en fréquence est une valeur fixe *x*₀,
et $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ et ${f}_{n} = {f}_{c} + n {x}_{0} ,$ dans lequel
T₀ est une position dans le domaine temporel d'une onde continue modulée en fréquence dont le numéro de séquence est 0 parmi les N ondes continues modulées en fréquence ; f_{c} est une position dans le domaine fréquentiel de l'onde continue modulée en fréquence dont le numéro de séquence est 0 parmi les N ondes continues modulées en fréquence ; et T_{c} est une durée de chaque onde continue modulée en fréquence dans la pluralité d'ondes continues modulées en fréquence, dans lequel la durée des N ondes continues modulées en fréquence est la même.

2. Procédé selon la revendication 1, dans lequel la première condition est liée à une position de la première onde continue modulée en fréquence parmi les N ondes continues modulées en fréquence.

3. Procédé selon la revendication 1 ou 2, dans lequel la position dans le domaine fréquentiel comprend une fréquence de départ ou une fréquence centrale, et la position dans le domaine temporel comprend une heure de départ ou une heure centrale.

4. Procédé selon la revendication 1, dans lequel $α = {f}_{c} {T}_{0} ;$ et $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1 ,$ dans lequel ${nf}_{n - 1} - \left(n-1\right) fn > 0 ,$ et T₀ est une position dans le domaine temporel d'une onde continue modulée en fréquence dont le numéro de séquence est 0 parmi les N ondes continues modulées en fréquence ; f_{c} est une position dans le domaine fréquentiel de l'onde continue modulée en fréquence dont le numéro de séquence est 0 parmi les N ondes continues modulées en fréquence ; et T_{c} est une durée de chaque onde continue modulée en fréquence parmi les N ondes continues modulées en fréquence, dans lequel la durée des N ondes continues modulées en fréquence est la même.

5. Procédé de réception de signal, comprenant :
la réception d'une seconde séquence d'ondes continues modulées en fréquence, dans lequel la seconde séquence d'ondes continues modulées en fréquence est un signal formé après qu'une première séquence d'ondes continues modulées en fréquence a été transmise par un premier appareil, propagée dans l'espace, et réfléchie par une cible ; et
la détermination d'informations sur la cible sur la base de la seconde séquence d'ondes continues modulées en fréquence et de la première séquence d'ondes continues modulées en fréquence, dans lequel les informations comprennent une distance et/ou une vitesse, dans lequel
la première séquence d'ondes continues modulées en fréquence comprend N ondes continues modulées en fréquence, N est un entier supérieur ou égal à 1, et un produit d'une position dans le domaine temporel et d'une position correspondante dans le domaine fréquentiel d'une première onde continue modulée en fréquence parmi les N ondes continues modulées en fréquence satisfait une première condition, dans lequel la première condition est une valeur prédéfinie, c'est-à-dire le produit de la position dans le domaine temporel et de la position correspondante dans le domaine fréquentiel de la première onde continue modulée en fréquence,
**caractérisé en ce que**, la première condition comprend : ${T}_{n} = \frac{α + nβ}{{f}_{n}} ,$ dans lequel
n représente un numéro de séquence d'une onde continue modulée en fréquence parmi les N ondes continues modulées en fréquence, et n = 0, 1, 2, ..., N - 1 ; Tₙ représente une position dans le domaine temporel d'une onde continue modulée en fréquence dont le numéro de séquence est n parmi les N ondes continues modulées en fréquence ; fₙ représente une position dans le domaine fréquentiel de l'onde continue modulée en fréquence dont le numéro de séquence est n parmi les N ondes continues modulées en fréquence ; et α et β sont des paramètres de saut de fréquence prédéfinis,
et les positions dans le domaine fréquentiel des N ondes continues modulées en fréquence sont distribuées à intervalles égaux dans le domaine fréquentiel, et un intervalle entre des positions dans le domaine fréquentiel de deux ondes continues modulées en fréquence adjacentes parmi les N ondes continues modulées en fréquence est une valeur fixe x₀,
et $α = {f}_{c} {T}_{0} ;$ $β = \frac{\left({f}_{c}+N{x}_{0}\right) \left({f}_{c}+\left(N-1\right){x}_{0}\right) {T}_{c}}{{f}_{c}} + {T}_{0} {x}_{0} ;$ et ${f}_{n} = {f}_{c} + n {x}_{0} ,$ dans lequel
T₀ est une position dans le domaine temporel d'une onde continue modulée en fréquence dont le numéro de séquence est 0 parmi les N ondes continues modulées en fréquence ; f_{c} est une position dans le domaine fréquentiel de l'onde continue modulée en fréquence dont le numéro de séquence est 0 parmi les N ondes continues modulées en fréquence ; et T_{c} est une durée de chaque onde continue modulée en fréquence dans la pluralité d'ondes continues modulées en fréquence, dans lequel la durée des N ondes continues modulées en fréquence est la même.

6. Procédé selon la revendication 5, dans lequel la première condition est liée à une position de la première onde continue modulée en fréquence parmi les N ondes continues modulées en fréquence.

7. Procédé selon la revendication 5 ou 6, dans lequel la position dans le domaine fréquentiel comprend une fréquence de départ ou une fréquence centrale, et la position dans le domaine temporel comprend une heure de départ ou une heure centrale.

8. Procédé selon la revendication 5, dans lequel $α = {f}_{c} {T}_{0} ;$ et $β = MAX \left(\frac{{f}_{n} {f}_{n - 1} {T}_{c} + {f}_{c} {T}_{0} \left({f}_{n}-{f}_{n - 1}\right)}{{nf}_{n - 1} - \left(n-1\right) {f}_{n}}\right) , 1 \leq n \leq N - 1$ dans lequel ${nf}_{n - 1} - \left(n-1\right) {f}_{n} > 0 ,$ et T₀ est une position dans le domaine temporel d'une onde continue modulée en fréquence dont le numéro de séquence est 0 parmi les N ondes continues modulées en fréquence ; f_{c} est une position dans le domaine fréquentiel de l'onde continue modulée en fréquence dont le numéro de séquence est 0 parmi les N ondes continues modulées en fréquence ; et T_{c} est une durée de chaque onde continue modulée en fréquence parmi les N ondes continues modulées en fréquence, dans lequel la durée des N ondes continues modulées en fréquence est la même.

9. Appareil, comprenant un moyen adapté pour exécuter le procédé selon l'une quelconque des revendications 1 à 4 ou l'une quelconque des revendications 5 à 8, dans lequel le moyen comprend un processeur (2001) et un circuit d'interface (2002), dans lequel le circuit d'interface (2002) est configuré pour : recevoir un signal d'un second appareil autre que l'appareil et transmettre le signal au processeur (2001), ou envoyer un signal du processeur (2001) à un second appareil autre que l'appareil.
